# EUROPÄISCHE PATENTSCHRIFT

(11) **EP 1 459 827 B1**
(45) Veröffentlichungstag und Bekanntmachung des Hinweises auf die Patenterteilung: **19.07.2006**
(21) Anmeldenummer: 04005942.0
(22) Anmeldetag: 12.03.2004
(51) Int. Cl.: B23D 45/10, B23D 45/02, B27B 5/06

(54) **Sägeaggregat mit Vorritzsäge**
Sawing unit with scoring saw
Unité de sciage avec scie à inciser

(30) Priorität: 18.03.2003 DE 10312865
(43) Veröffentlichungstag der Anmeldung: 22.09.2004
(73) Patentinhaber: REICH SPEZIALMASCHINEN GmbH, 72622 Nürtingen (DE)
(72) Erfinder: Stolz, Jochen, 72574 Bad Urach (DE); Lorber, Denis, 72663 Grossbettlingen (DE)
(74) Vertreter: Hoeger, Stellrecht & Partner Patentanwälte

(56) Entgegenhaltungen:
- DE-A- 2 523 034
- DE-A- 2 818 421
- DE-A- 4 409 540
- US-A- 4 706 535

## Beschreibung

Die Erfindung betrifft ein Sägeaggregat für Maschinen zur Bearbeitung plattenförmiger Werkstücke gemäß dem Oberbegriff von Anspruch 1, wobei die Maschinen einen Auflagetisch zum Auflegen eines Werkstückes in einer im wesentlichen horizontalen Bearbeitungsebene sowie einen Bearbeitungskopf zur Halterung und Führung des Sägeaggregates aufweisen und der Bearbeitungskopf und der Auflagetisch relativ zueinander entlang mindestens drei aufeinander senkrecht stehender Achsen verfahrbar sind, wobei das Sägeaggregat während der Bearbeitung eines Werkstückes zusammen mit dem Bearbeitungskopf verfahrbar ist und eine drehend antreibbare Trennsägewelle aufweist, an der ein Trennsägeblatt drehfest gehalten ist.

Derartige Sägeaggregate sind aus DE 44 09 540 A1 sowie DE 25 23 034 A1 bekannt. Sie kommen bei numerisch gesteuerten Bearbeitungsmaschinen zum Einsatz, insbesondere bei CNC-gesteuerten Bearbeitungsmaschinen, bei denen das Werkstück auf einen im wesentlichen horizontal ausgerichteten Auflagetisch auflegbar ist und ein Bearbeitungskopf der Bearbeitungsmaschine relativ zum Auflagetisch sowohl in horizontaler Richtung als auch in vertikaler Richtung verfahrbar ist und am Bearbeitungskopf unterschiedlichste Bearbeitungsaggregate, beispielsweise Fräs-, Bohr- und Sägeaggregate montierbar sind. Derartige CNC-Bearbeitungsmaschinen ermöglichen es, innerhalb kurzer Zeit eine Vielzahl von Bearbeitungsschritte vornehmen zu können. Soll hierbei das plattenförmige Werkstück, beispielsweise eine Holzplatte, aufgetrennt werden, so kommt hierzu das Sägeaggregat zum Einsatz.

Um beim Auftrennen des Werkstückes eine Beschädigung von dessen Oberseite oder dessen Unterseite durch das Trennsägeblatt zu vermeiden, ist es bisher üblich, das Sägeaggregat zunächst in einem ersten Bearbeitungsschritt in einem derartigen Abstand zur Oberseite des Werkstückes zu verfahren, daß das Trennsägeblatt lediglich die Oberseite des Werkstückes einritzt, wobei die Drehrichtung des Trennsägeblattes derart gewählt ist, daß das Trennsägeblatt bezogen auf die Bearbeitungsrichtung mit seiner Vorderkante von oben geringfügig in das Werkstück eintaucht. Anschließend wird in einem zweiten Bearbeitungsschritt das Sägeaggregat entgegen der ursprünglichen Bearbeitungsrichtung verfahren, wobei es eine dem Werkstück derart angenäherte Stellung einnimmt, daß das Trennsägeblatt das plattenförmige Werkstück vollständig durchgreift und somit einen Trennschnitt vornimmt. Eine derartige Vorgehensweise hat sich insofern bewährt, als dadurch eine Beschädigung der Ober- oder der Unterseite des Werkstückes bei der Vornahme des Trennschnittes vermieden wird. Nachteilig ist allerdings, daß für den Trennschnitt zwei Bearbeitungsschritte erforderlich sind.

Aus DE 28 18 421 A1 ist eine Maschine zum Aufteilen oder Zerlegen von Platten insebsondere aus Holz bekannt, bei der ein Trennsägeblatt und ein diesem vorgelagertes Vorritzsägeblatt zum Einsatz kommen. Das Vorritzsägeblatt ist an einem um die Drehachse des Trennsägeblattes schwenkbaren Führungsarm gelagert, und zur Einstellung des Andruckes des Vorritzsägeblattes gegen die Oberfläche des zu bearbeitenden Werkstückes kommt ein druckbelasteter Stößel zum Einsatz, der am Führungsarm angreift.

US 4 706 535 A offenbart eine Sägevorrichtung mit einem Trenn- und einem Vorritzsägeblatt, die drehend antreibbar sind. Das Trennsägeblatt ist um eine ortsfeste Drehachse rotierbar und das Vorritzsägeblatt kann mittels einer an einem Tisch gehaltenen Justiervorrichtung um die Drehachse des Trennsägeblattes verschwenkt werden.

Aufgabe der vorliegenden Erfindung ist es, ein Sägeaggregat der eingangs genannten Art derart weiterzubilden, daß die Vornahme eines Trennschnittes vereinfacht werden kann.

Diese Aufgabe wird bei einem Sägeaggregat der gattungsgemäßen Art erfindungsgemäß dadurch gelöst, daß das Sägeaggregat am Bearbeitungskopf lösbar verbindbar und um eine senkrecht zur Bearbeitungsebene ausgerichtete Drehachse verdrehbar gehalten ist, und daß das Sägeaggregat eine Vorritzeinheit aufweist mit einem entgegen der Drehrichtung des Trennsägeblattes drehend antreibbaren Vorritzsägeblatt, das dem Trennsägeblatt in Bearbeitungsrichtung vorgelagert ist, wobei die Vorritzeinheit um die Drehachse der Trennsägewelle verschwenkbar - beispielsweise an der Trennsägewelle - gelagert und in einer gewünschten Schwenkstellung relativ zur Drehachse der Trennsägewelle feststellbar ist.

Eine derartige Ausgestaltung des Sägeaggregates hat den Vorteil, daß während eines einzigen Bearbeitungsschrittes das Werkstück mittels des Vorritzsägeblattes auf seiner Oberseite vorgeritzt und während desselben Bearbeitungsschrittes der Trennschnitt mittels des Trennsägeblattes vorgenommen werden kann. Die beiden Sägeblätter weisen hierbei gegensätzliche Drehrichtungen auf, so daß eine Beschädigung des Werkstückes auf seiner Oberseite oder auf seiner Unterseite zuverlässig vermieden wird. Damit die vom Vorritzsägeblatt erzeugte Fuge vom Trennsägeblatt nicht beschädigt werden kann, weist das Vorritzsägeblatt eine geringfügig größere Schnittbreite auf wie das Trennsägeblatt. Die schwenkbare Lagerung der Vorritzeinheit ermöglicht es, das Sägeaggregat besonders kompakt auszugestalten, wobei die Stellung der Vorritzeinheit veränderbar ist. Zur Feststellung der Vorritzeinheit in einer gewünschten Schwenkstellung kann beispielsweise eine manuell lösbare Verbindung, beispielsweise eine Schraubverbindung, zum Einsatz kommen.

Erfindungsgemäß ist das Sägeaggregat mit dem Bearbeitungskopf lösbar verbindbar. Dies hat den Vorteil, daß das Sägeaggregat auf einfache Weise gegen ein anderes Bearbeitungsaggregat ausgetauscht werden kann, um nacheinander unterschiedliche Bearbeitungen eines Werkstückes vornehmen zu können.

Es kann vorgesehen sein, daß dem Vorritzsägeblatt und dem Trennsägeblatt separate Antriebseinheiten zugeordnet sind. Als vorteilhaft hat es sich allerdings erwiesen, wenn die Vorritzeinheit Getriebemittel umfaßt, über die das Vorritzsägeblatt mit der Trennsägewelle gekoppelt ist. Dies hat den Vorteil, daß zum Drehantrieb des Trennsägeblattes und des Vorritzsägeblattes eine gemeinsame Antriebseinheit zum Einsatz kommen kann. Von der Trennsägewelle kann hierbei über die Getriebemittel eine Antriebskraft auf das Vorritzsägeblatt übertragen werden, wobei mittels der Getriebemittel auch eine Drehrichtungsumkehr auf konstruktiv einfache Weise sichergestellt werden kann.

So kann beispielsweise vorgesehen sein, daß die Getriebemittel zwei miteinander kämmende Zahnräder umfassen, wobei die beiden Zahnräder vorzugsweise über eine Schrägverzahnung miteinander gekoppelt sind.

Zusätzlich können die Getriebemittel beispielsweise einen Riementrieb aufweisen, vorzugsweise kommt ein Zahnriementrieb zum Einsatz.

Bei einer besonders bevorzugten Ausführungsform des erfindungsgemäßen Sägeaggregates ist das Vorritzsägeblatt in der durch das Trennsägeblatt definierten Trennebene verstellbar gehalten. Dies ermöglicht es, das Vorritzsägeblatt relativ zum Trennsägeblatt in unterschiedlichen Stellungen anzuordnen, insbesondere kann vorgesehen sein, daß die Eindringtiefe des Vorritzsägeblattes in das zu bearbeitende Werkstück veränderbar ist.

Zur lösbaren Verbindung des Sägeaggregates mit dem Bearbeitungskopf der Bearbeitungsmaschine kann das Sägeaggregat ein Verbindungselement aufweisen, beispielsweise ein Steilkegel oder einen Hohlschaft, insbesondere in Form einer HSK-Schnittstelle. Hierbei hat es sich als günstig erwiesen, wenn die Vorritzeinheit relativ zum Verbindungselement verstellbar ist. Die Position der Vorritzeinheit relativ zum Verbindungselement kann dadurch beispielsweise an die Stärke des jeweils zu bearbeitenden Werkstückes angepaßt werden.

Vorzugsweise ist die Vorritzeinheit manuell verstellbar. Alternativ und/oder ergänzend kann vorgesehen sein, daß die Vorritzeinheit über maschinenseitig ansteuerbare - beispielsweise pneumatische oder hydraulische - Verstellmittel verstellbar ist.

Günstig ist es, wenn die Vorritzeinheit einen an der Trennsägewelle verschwenkbar gelagerten Ausleger umfaßt sowie eine am Ausleger verdrehbar gelagerte Antriebswelle, die über - beispielsweise am Ausleger gehaltene - Getriebemittel mit der Trennsägewelle gekoppelt ist, wobei an der Antriebswelle das Vorritzsägeblatt drehfest gehalten ist.

Von besonderem Vorteil ist es, wenn der Ausleger ein Gehäuse ausbildet, daß von der Trennsägewelle durchgriffen ist und das die Getriebemittel aufnimmt. Als günstig hat es sich hierbei erwiesen, das Gehäuse zweiteilig auszugestalten mit einem Gehäusedeckel und einer Gehäusewanne, die lösbar miteinander verbindbar sind und die Getriebemittel staubdicht umgeben.

Die Schwenkstellung der Vorritzeinheit bezogen auf die Drehachse der Trennsägewelle ist bei einer bevorzugten Ausführungsform justierbar. Dies ermöglicht eine genaue und reproduzierbare Einstellung der Lage des Vorritzsägeblattes relativ zur Oberseite des zu bearbeitenden Werkstückes.

Günstig ist es hierbei, wenn die Schwenkstellung der Vorritzeinheit manuell justierbar ist. Alternativ und/oder ergänzend kann vorgesehen sein, daß die Schwenkstellung der Vorritzeinheit maschinenseitig steuerbar justierbar ist, so daß die Schwenkstellung selbsttätig mittels der Bearbeitungsmaschine gesteuert verändert und reproduzierbar eingestellt werden kann.

Die nachfolgende Beschreibung einer bevorzugten Ausführungsform der Erfindung dient im Zusammenhang mit der Zeichnung der näheren Erläuterung. Es zeigen:
- Figur 1:: eine schematische Seitenansicht einer Bearbeitungsmaschine mit einem Sägeaggregat;
- Figur 2:: eine schematische, schaubildliche Darstellung eines erfindungsgemäßen Sägeaggregates;
- Figur 3:: eine Schnittansicht längs der Linie 3-3 in Figur 2 und

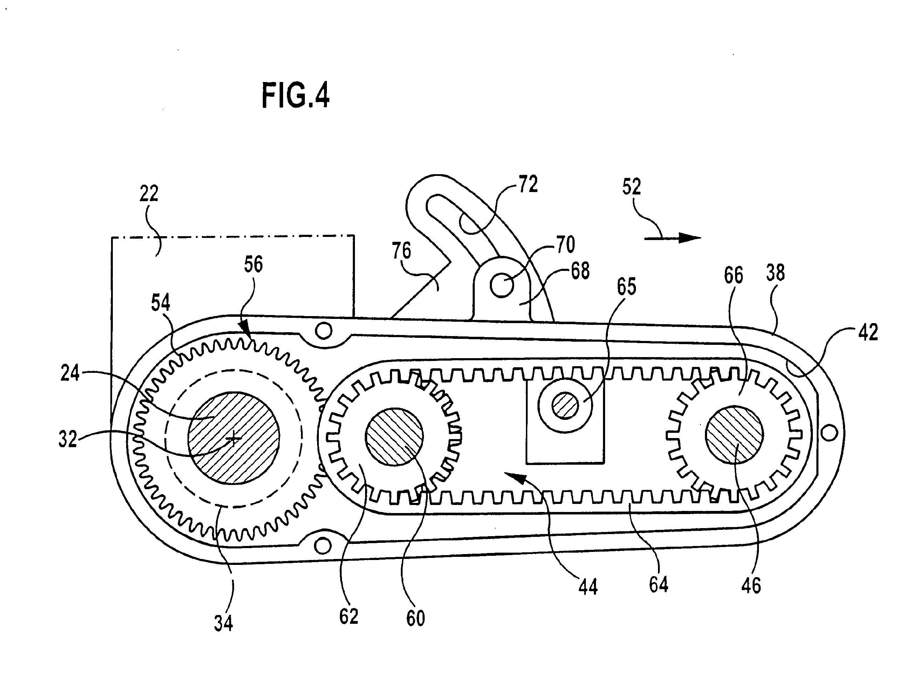

- Figur 4:: eine Schnittansicht längs der Linie 4-4 in Figur 3.

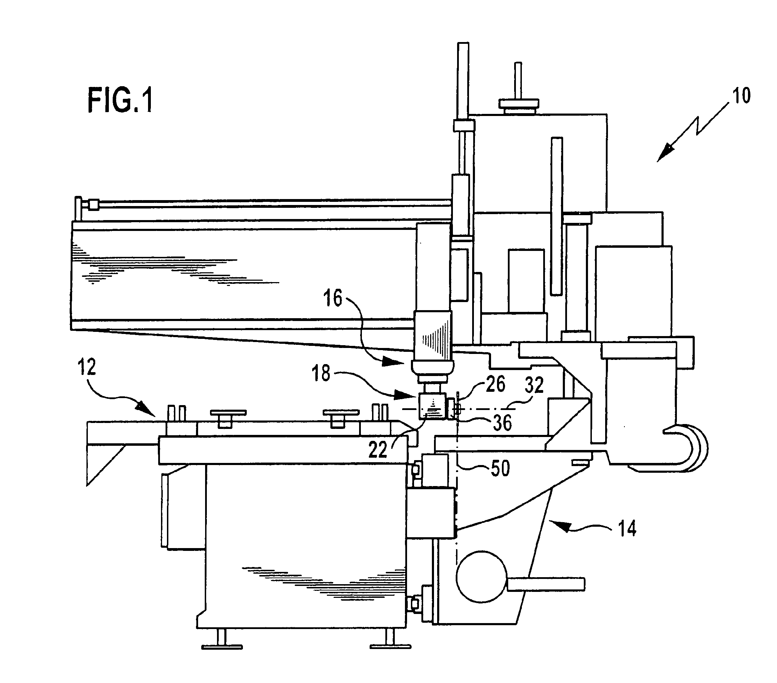

In Figur 1 ist in schematischer Darstellung eine insgesamt mit dem Bezugszeichen 10 belegte Bearbeitungsmaschine dargestellt zur horizontalen Bearbeitung plattenförmiger Werkstücke. Derartige Bearbeitungsmaschinen kommen insbesondere in Form sogenannter CNC-gesteuerter Bearbeitungszentren zum Einsatz, die eine reproduzierbare Bearbeitung beispielsweise von Holz- oder Kunststoffplatten ermöglichen.

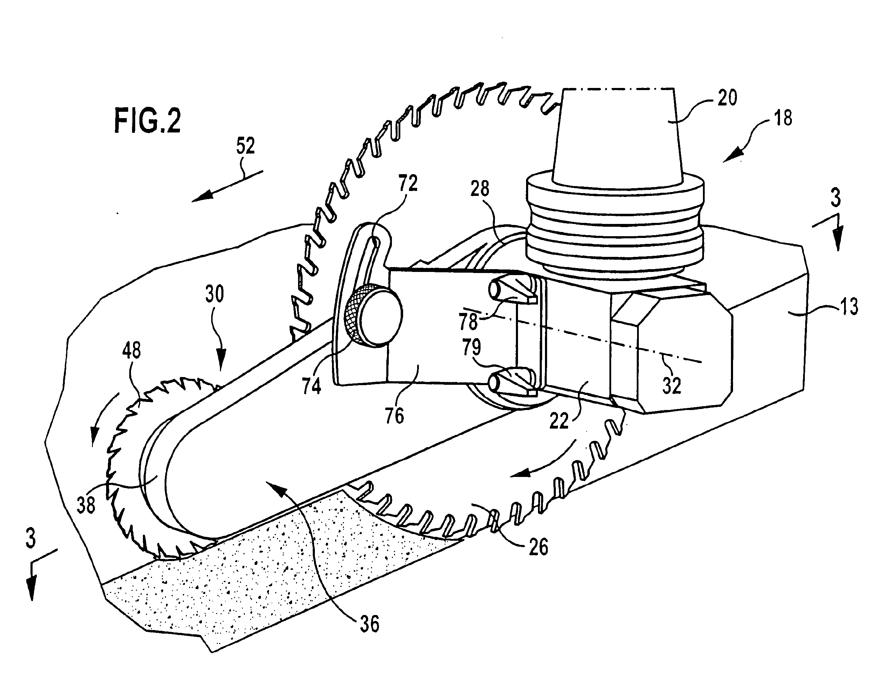

Die Bearbeitungsmaschine 10 umfaßt einen Auflagetisch 12, auf dem ein zu bearbeitendes Werkstück 13 (siehe Figur 2) in einer horizontalen Bearbeitungsebene ausgerichtet und mit dem Auflagetisch verspannt werden kann. Hierzu kann beispielsweise eine Saugvorrichtung zum Ansaugen des Werkstückes zum Einsatz kommen. Derartige Saugvorrichtungen sind dem Fachmann bekannt.

An dem Auflagetisch 12 ist in dessen Längsrichtung verfahrbar ein Träger 14 gehalten, der in Querrichtung des Auflagetisches 12 sowie in vertikaler Richtung senkrecht zur Bearbeitungsebene verfahrbar einen Bearbeitungskopf 16 trägt. An dem Bearbeitungskopf 16 ist ein Sägeaggregat 18 lösbar verbindbar und verdrehbar gehalten. Das Sägeaggregat 18 ist während der Bearbeitung des Werkstückes 13 zusammen mit dem Bearbeitungskopf 16 entlang dreier aufeinander senkrecht stehender Achsen, nämlich einer x- und einer y-Achse in der horizontalen Bearbeitungsebene und einer z-Achse senkrecht zur Bearbeitungsebene, verfahrbar. Außerdem ist das Sägeaggregat 18 um die z-Achse verdrehbar.

Wie insbesondere aus Figur 2 deutlich wird, umfaßt das Sägeaggregat 18 zur Verbindung mit dem Bearbeitungskopf 16 einen Hohlschaftkegel 20. Das Sägeaggregat 18 weist außerdem ein Winkelgetriebe 22 auf, das abtriebsseitig mit einer Trennsägewelle 24 gekoppelt ist, an deren freiem Ende in üblicher Weise ein Trennsägeblatt 26 drehfest und lösbar verbindbar gehalten ist. In dem Fachmann bekannter Weise kann über den Hohlschaftkegel 20 vom Bearbeitungskopf 16 eine Antriebskraft auf das Winkelgetriebe 22 und von diesem auf die Trennsägewelle 24 übertragen werden, so daß das Trennsägeblatt 26 in Drehung versetzt wird zur Vornahme eines Trennschnitts am Werkstück 13.

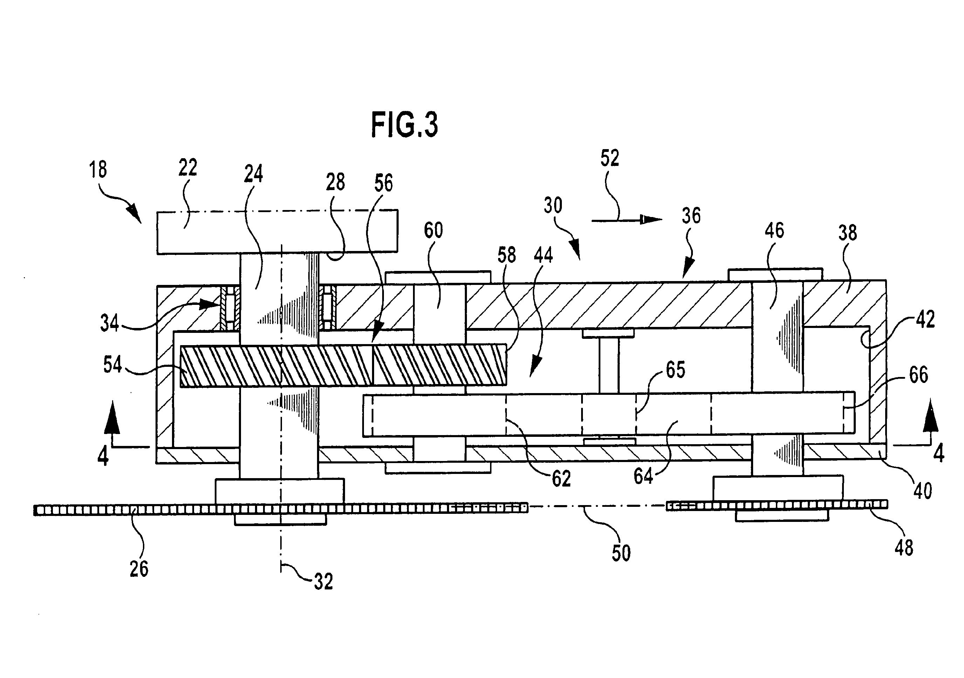

Wie insbesondere aus Figur 3 deutlich wird, steht die Trennsägewelle 24 mit ihrem freien Endbereich über die dem Trennsägeblatt 26 zugewandte Stirnseite 28 des Winkelgetriebes 22 deutlich hervor. In diesem überstehenden Bereich lagert die Trennsägewelle 24 eine Vorritzeinheit 30, die um die Drehachse 32 der Trennsägewelle 24 verschwenkbar ist.

Die Vorritzeinheit 30 umfaßt einen mittels eines Lagers 34 an der Trennsägewelle 24 gelagerten Ausleger 36, der ein zweiteiliges Gehäuse ausbildet mit einer Gehäusewanne 38 und einem Gehäusedeckel 40, die über in der Zeichnung nicht dargestellte Schraubverbindungen lösbar miteinander verbunden sind und einen Innenraum 42 umgeben, der Getriebemittel 44 aufnimmt.

Der nach Art eines Gehäuses ausgestaltete Ausleger 36 wird von dem freien Endbereich der Trennsägewelle 24 durchgriffen sowie von einer parallel zur Trennsägewelle 24 ausgerichteten Antriebswelle 46, die über an sich bekannte und deshalb in der Zeichnung nicht dargestellte Lager frei drehbar an der Gehäusewanne 38 und am Gehäusedeckel 40 gelagert ist und über den Gehäusedeckel 40 übersteht. Stirnseitig ist an der Antriebswelle 46 ein Vorritzsägeblatt 48 drehfest und lösbar verbindbar gehalten, das in der durch das Trennsägeblatt 26 definierten Trennebene 50 ausgerichtet ist und in Bearbeitungsrichtung 52 des Sägeaggregates 18 dem Trennsägeblatt 26 vorgelagert ist. Das Vorritzsägeblatt 48 weist eine geringfügig größere Schnittbreite auf wie das Trennsägeblatt 26.

Innerhalb des Auslegers 36 ist an der Trennsägewelle 24 ein erstes Zahnrad 54 drehfest gehalten, das über eine Schrägverzahnung 56 mit einem zweiten Zahnrad 58 kämmt, das drehfest auf einer Zwischenwelle 60 gehalten ist, die frei drehbar an der Gehäusewanne 38 sowie dem Gehäusedeckel 40 festgelegt ist und zusätzlich zum zweiten Zahnrad 58 eine Zahnriemenscheibe 62 trägt, die über einen Zahnriemen 64 mit einer weiteren Zahnriemenscheibe 66 gekoppelt ist, die drehfest auf der Antriebswelle 56 gehalten ist. Der Zahnriemen 64 ist über eine im Ausleger 36 frei drehbar gelagerte Spannrolle 65 geführt.

Über die Getriebemittel 44 in Form der Zahnräder 54 und 58 sowie der Zahnriemenscheiben 62 und 66 und des Zahnriemens 64 kann eine Drehbewegung von der Trennsägewelle 24 unter Umkehr der Drehrichtung auf die Antriebswelle 46 übertragen werden.

Wie bereits erläutert, ist die Vorritzeinheit 30 um die Drehachse 32 der Trennsägewelle 24 verschwenkbar an der Trennsägewelle 24 gelagert. Um die Vorritzeinheit 30 in einer bestimmten Verschwenkstellung feststellen zu können, ist an die dem Werkstück 13 abgewandte Oberseite des Auslegers 36 ein Vorsprung 68 angeformt, der von einem parallel zur Drehachse 32 der Trennsägewelle 24 ausgerichteten Führungszapfen 70 durchgriffen ist. Letzterer durchgreift mit seinem den Sägeblättern 26 und 48 abgewandten rückwärtigen Endbereich einen kreisbogenförmigen Führungsschlitz 72 und weist auf seinem über den Führungsschlitz 72 überstehenden freien Endbereich ein Außengewinde auf, auf das eine Rändelmutter 74 aufgeschraubt ist.

Der Führungsschlitz 72 ist in eine Stütze 76 eingeformt, die in Bearbeitungsrichtung 52 vom Winkelgetriebe 22 absteht und mittels Flügelschrauben 78, 79 mit dem Winkelgetriebe 22 verschraubt ist. Der Führungszapfen 70 sowie der Führungsschlitz 72 bilden miteinander zusammenwirkende Führungselemente zur Führung der Vorritzeinheit 30 bei einer Verschwenkbewegung. Außerdem ermöglichen es der Führungszapfen 70 und der Führungsschlitz 72 in Verbindung mit der Rändelmutter 74, die Vorritzeinheit 30 zu justieren und in einer gewünschten Verschwenkstellung relativ zur Drehachse 32 der Trennsägewelle 24 festzustellen.

Zur Vornahme eines Trennschnittes kann das austauschbar am Bearbeitungskopf 16 gehaltene Sägeaggregat 18 zusammen mit dem Bearbeitungskopf 16 entlang der Bearbeitungsrichtung 52 verfahren werden, wobei in einem einzigen Bearbeitungsschritt mittels des nur geringfügig oberseitig in das Werkstück 13 eintauchenden Vorritzsägeblattes 48 die Oberseite des Werkstückes 13 vorgeritzt und anschließend mittels des das Werkstück 13 durchgreifenden Trennsägeblattes 26 das Werkstück 13 aufgetrennt werden kann. Eine Beschädigung der Werkstückoberseite oder Werkstückunterseite während der Vornahme des Trennschnittes wird hierbei aufgrund der einander entgegengesetzten Drehrichtungen von Vorritz- und Trennsägeblatt 48 bzw. 26 sowie der geringfügig größeren Schnittbreite des Vorritzsägeblattes 48 gegenüber dem Trennsägeblatt 26 verhindert.

## Patentansprüche

1. Sägeaggregat für Maschinen zur Bearbeitung plattenförmiger Werkstücke, wobei die Maschinen (10) einen Auflagetisch (12) zum Auflegen eines Werkstückes in einer im wesentlichen horizontalen Bearbeitungsebene sowie einen Bearbeitungskopf (16) zur Halterung und Führung des Sägeaggregates (18) aufweisen und der Bearbeitungskopf (16) und der Auflagetisch (12) relativ zueinander entlang mindestens drei aufeinander senkrecht stehender Achsen verfahrbar sind, wobei das Sägeaggregat (18) während der Bearbeitung eines Werkstückes zusammen mit dem Bearbeitungskopf (16) verfahrbar ist und eine drehend antreibbare Trennsägewelle (24) aufweist, an der ein Trennsägeblatt (26) drehfest gehalten ist, **dadurch gekennzeichnet, daß** das Sägeaggregat (18) am Bearbeitungskopf (16) lösbar verbindbar und um eine senkrecht zur Bearbeitungsebene ausgerichtete Drehachse verdrehbar gehalten ist, und daß das Sägeaggregat (18) eine Vorritzeinheit (30) aufweist mit einem entgegen der Drehrichtung des Trennsägeblattes (26) drehend antreibbaren Vorritzsägeblatt (48), das dem Trennsägeblatt (26) in Bearbeitungsrichtung (52) vorgelagert ist, wobei die Vorritzeinheit (30) um die Drehachse (32) der Trennsägewelle (24) verschwenkbar gelagert ist und in einer gewünschten Schwenkstellung relativ zur Drehachse (32) der Trennsägewelle (24) feststellbar ist.

2. Sägeaggregat nach Anspruch 1, **dadurch gekennzeichnet, daß** die Vorritzeinheit (30) Getriebemittel (44) umfaßt, über die das Vorritzsägeblatt (48) mit der Trennsägewelle (24) gekoppelt ist.

3. Sägeaggregat nach Anspruch 1 oder 2, **dadurch gekennzeichnet, daß** das Vorritzsägeblatt (48) in der durch das Trennsägeblatt (28) definierten Trennebene (50) verstellbar gehalten ist.

4. Sägeaggregat nach einem der voranstehenden Ansprüche, **dadurch gekennzeichnet, daß** das Sägeaggregat ein Verbindungselement (20) umfaßt zur lösbaren Verbindung des Sägeaggregates (18) mit dem Bearbeitungskopf (16), und daß die Vorritzeinheit (30) relativ zum Verbindungselement (20) verstellbar ist.

5. Sägeaggregat nach Anspruch 4, **dadurch gekennzeichnet, daß** die Vorritzeinheit (30) manuell verstellbar ist.

6. Sägeaggregat nach einem der voranstehenden Ansprüche, **dadurch gekennzeichnet, daß** die Vorritzeinheit (30) einen an der Trennsägewelle (24) verschwenkbar gelagerten Ausleger (36) umfaßt sowie eine am Ausleger (36) drehbar gelagerte Antriebswelle (46), die über Getriebemittel (44) mit der Trennsägewelle (24) gekoppelt ist, wobei an der Antriebswelle (46) das Vorritzsägeblatt (48) drehfest gehalten ist.

7. Sägeaggregat nach Anspruch 6, **dadurch gekennzeichnet, daß** der Ausleger (36) ein Gehäuse ausbildet, das von der Trennsägewelle (24) durchgriffen ist und das die Getriebemittel (44) aufnimmt.

8. Sägeaggregat nach einem der voranstehenden Ansprüche, **dadurch gekennzeichnet, daß** die Schwenkstellung der Vorritzeinheit (30) bezogen auf die Drehachse (32) der Trennsägewelle (24) justierbar ist.

9. Sägeaggregat nach Anspruch 8, **dadurch gekennzeichnet, daß** die Schwenkstellung der Vorritzeinheit (30) manuell justierbar ist,

## Claims

1. Saw unit for machines for processing plate-like workpieces, the machines (10) having a support table (12) for positioning a workpiece in a substantially horizontal processing plane and a processing head (16) for holding and guiding the saw unit (18) and the processing head (16) and the support table (12) being displaceable relative to each other along at least three axes, which are located perpendicularly relative to each other, the saw unit (18) being displaceable together with the processing head (16) during the processing of a workpiece and having a dividing saw shaft (24) which can be driven in rotation and on which a dividing saw blade (26) is held in a rotationally secure manner, **characterised in that** the saw unit (18) is held so as to be able to be releasably connected to the processing head (16) and to be rotatable about an axis of rotation which is orientated perpendicularly relative to the processing plane, and **in that** the saw unit (18) has a scoring unit (30) having a scoring saw blade (48) which can be driven in rotation counter to the direction of rotation of the dividing saw blade (26) and which is arranged upstream of the dividing saw blade (26) in the processing direction (52), the scoring unit (30) being supported so as to be pivotable about the axis of rotation (32) of the dividing saw shaft (24) and being able to be secured in a desired pivot position relative to the axis of rotation (32) of the dividing saw shaft (24).

2. Saw unit according to claim 1, **characterised in that** the scoring unit (30) comprises gear means (44) by means of which the scoring saw blade (48) is connected to the dividing saw shaft (24).

3. Saw unit according to claim 1 or 2, **characterised in that** the scoring saw blade (48) is held so as to be adjustable in the dividing plane (50) defined by the dividing saw blade (28).

4. Saw unit according to any one of the preceding claims, **characterised in that** the saw unit comprises a connection element (20) for releasably connecting the saw unit (18) to the processing head (16), and **in that** the scoring unit (30) can be adjusted relative to the connecting element (20).

5. Saw unit according to claim 4, **characterised in that** the scoring unit (30) can be manually adjusted.

6. Saw unit according to any one of the preceding claims, **characterised in that** the scoring unit (30) comprises an extension arm (36), which is pivotably supported on the dividing saw shaft (24), and a drive shaft (46) which is rotatably supported on the extension arm (36) and which is connected to the dividing saw shaft (24) by way of gear means (44), the scoring saw blade (48) being held in a rotationally secure manner on the drive shaft (46).

7. Saw unit according to claim 6, **characterised in that** the extension arm (36) forms a housing through which the dividing saw shaft (24) extends and which receives the gear means (44).

8. Saw unit according to any one of the preceding claims, **characterised in that** the pivot position of the scoring unit (30) can be adjusted relative to the axis of rotation (32) of the dividing saw shaft (24).

9. Saw unit according to claim 8, **characterised in that** the pivot position of the scoring unit (30) can be manually adjusted.

## Revendications

1. Unité de sciage pour machines d'usinage de pièces en forme de plaque, les machines (10) comportant une table porte-pièce (12) destinée à supporter une pièce dans un plan d'usinage sensiblement horizontal, ainsi qu'une tête d'usinage (16) destinée à maintenir et guider l'unité de sciage (18), et la tête d'usinage (16) et la table porte-pièce (12) étant déplaçables l'une par rapport à l'autre le long d'au moins trois axes perpendiculaires entre eux, l'unité de sciage (18) étant déplaçable conjointement avec la tête d'usinage (16) pendant l'usinage d'une pièce et comportant un arbre de scie à tronçonner (24) qui peut être entraîné en rotation et sur lequel une lame de scie à tronçonner (26) est montée fixe en rotation, **caractérisée en ce que** l'unité de sciage (18) peut être reliée de façon amovible à la tête d'usinage (16), et est supportée de manière à pouvoir tourner autour d'un axe de rotation orienté perpendiculairement au plan d'usinage, et **en ce que** l'unité de sciage (18) comporte une unité de pré-entaillage (30) comprenant une lame de scie de pré-entaillage (48) qui peut être entraînée en rotation dans un sens contraire au sens de rotation de la lame de scie à tronçonner (26) et qui est montée en amont de la lame de scie à tronçonner (26) par référence au sens d'usinage (52), l'unité de pré-entaillage (30) étant montée de façon à pouvoir pivoter autour de l'axe de rotation (32) de l'arbre de scie à tronçonner (24) et pouvant être immobilisée dans une position de pivotement souhaitée par rapport à l'axe de rotation (32) de l'arbre de scie à tronçonner (24).

2. Unité de sciage selon la revendication 1,
**caractérisée en ce que** l'unité de pré-entaillage (30) comporte des moyens de transmission (44) par l'intermédiaire desquels la lame de scie de pré-entaillage (48) est couplée à l'arbre de scie à tronçonner (24).

3. Unité de sciage selon la revendication 1 ou 2, **caractérisée en ce que** la lame de scie de pré-entaillage (48) est maintenue de façon pouvoir se déplacer dans le plan de tronçonnage (50) défini par le lame de scie à tronçonner (28).

4. Unité de sciage selon l'une des revendications précédentes, **caractérisée en ce que** l'unité de sciage comporte un élément de liaison (20) permettant de relier de façon amovible l'unité de sciage (18) à la tête d'usinage (16), et **en ce que** l'unité de pré-entaillage (30) est déplaçable par rapport à l'élément de liaison (20).

5. Unité de sciage selon la revendication 4, **caractérisée en ce que** l'unité de pré-entaillage (30) est déplaçable manuellement.

6. Unité de sciage selon l'une des revendications précédentes, **caractérisée en ce que** l'unité de pré-entaillage (30) comporte un bras (36) qui est monté à pivotement sur l'arbre de sciage à tronçonner (24), ainsi qu'un arbre d'entraînement (46) qui est monté à rotation sur le bras (36) et qui est couplé par l'intermédiaire des moyens de transmission (44) à l'arbre de sciage à tronçonner (24), la lame de scie de pré-entaillage (48) étant supportée à rotation par l'arbre d'entraînement (46).

7. Unité de sciage selon la revendication 6, **caractérisée en ce que** le bras (36) forme un boîtier qui est traversé de part en part par l'arbre de sciage à tronçonner (24), et qui reçoit les moyens de transmission (44).

8. Unité de sciage selon l'une des revendications précédentes, **caractérisée en ce que** la position de pivotement de l'unité de pré-entaillage (30) peut être ajustée par rapport à l'axe de rotation (32) de l'arbre de sciage à tronçonner (24).

9. Unité de sciage selon la revendication 8, **caractérisée en ce que** la position de pivotement de l'unité de pré-entaillage (30) peut être ajustée manuellement.
